# EUROPEAN PATENT APPLICATION

(11) **EP 3 012 750 A1**
(43) Date of publication of application: **27.04.2016**
(21) Application number: 15178533.4
(22) Date of filing: 27.07.2015
(51) Int. Cl.: G06F 17/30

(54) **METHOD AND DEVICE FOR IDENTIFYING ENCODING OF WEB PAGE**

(30) Priority: 21.10.2014 CN 201410562477
(71) Applicant: Xiaomi Inc., Beijing 100085 (CN)
(72) Inventor: ZUO, Jinglong, 100085 Haidian District (CN); FAN, Jinsong, 100085 Haidian District (CN); TIAN, Fan, 100085 Haidian District (CN)
(74) Representative: Sadler, Peter Frederick

(57) **Abstract**

The present disclosure relates to a method and a device for identifying encoding of a web page, which belongs to the field of computer networks. The method includes: loading (101) web page data comprising at least one web page resource; detecting (102) whether the web page resource is a HTML resource and whether it specifies an encoding mode; if the web page resource is a HTML resource and it does not specify the encoding mode, identifying (103) the encoding mode of the HTML resource; and decoding (104) the HTML resource with a decoding mode corresponding to the identified encoding mode. The present disclosure overcomes the problem in the related art that a "charset" field in encoding a web page is missed that results in display of messy codes through a browser, then even if the encoding mode is not specified, the web page resource may be decoded and displayed properly.

## Description

### TECHNICAL FIELD

The present disclosure generally relates to the field of computer networks, and more particularly, to a method and a device for identifying encoding of a web page.

### BACKGROUND

With the development of network technology, one of the most commonly used functions is to browse a web page through a browser in a terminal by a user.

Since web page data may be encoded with various encoding modes, a browser needs to firstly identify an encoding mode of the web page data according to a "charset" field in the web page data, then decode the web page data with a decoding mode corresponding to the identified encoding mode, and finally display the web page data. However, along with the popularity of web site building technology and web page editing technology, web page data produced by a technician may miss a "charset" field or carry a misspelt "charset" field, in this circumstance, the browser may decode the web page data with a default decoding mode, which may result in display of messy codes.

### SUMMARY

The invention is defined in the independent claims to which reference is now directed. Preferred features are set out in the dependent claims.

In order to overcome the problem in the related art that a "charset" field in encoding a web page is missed or misspelt that results in display of messy codes through a browser, a method and a device for identifying encoding of a web page are provided by embodiments of the present disclosure. The technical solutions are as follows.

A method for identifying encoding of a web page is provided by embodiments of the present disclosure, including:
loading web page data including at least one web page resource;
detecting whether the web page resource is a HTML (Hyper Text Mark-up Language) resource and whether it specifies an encoding mode;
if the web page resource is a HTML resource and it does not specify the encoding mode, identifying the encoding mode of the HTML resource; and
decoding the HTML resource with a decoding mode corresponding to the identified encoding mode.

In an embodiment, the method further includes:
if the web page resource is a HTML resource and it specifies an encoding mode, detecting whether the specified encoding mode is one of preset encoding modes; and
if the specified encoding mode is not one of the preset encoding modes, identifying the encoding mode of the HTML resource; or, performing an automatic correction on the specified encoding mode, to obtain an encoding mode after the automatic correction.

In an embodiment, the identifying the encoding mode of the HTML resource, includes:
identifying the encoding mode of the HTML resource by calling a preset character encoding identification algorithm.

In an embodiment, the performing the automatic correction on the specified encoding mode, to obtain the encoding mode after the automatic correction, includes:
calculating a spelling similarity between the specified encoding mode and each of the preset encoding modes respectively; and
if a maximum spelling similarity is larger than a preset threshold, determining a preset encoding mode corresponding to the maximum spelling similarity as the encoding mode after the automatic correction.

In an embodiment, the method further includes:
if the web resource is a CSS (Cascading Style Sheets) resource, identifying the encoding mode adopted by the HTML resource in the web page data as an encoding mode of the CSS resource, and decoding the CSS resource with a decoding mode corresponding to the identified encoding mode.

According to a second aspect of embodiments of the present disclosure, there provides a device for identifying encoding of a web page, including:
a data loading module, configured to load web page data including at least one web page resource;
a mode detecting module, configured to detect whether the web page resource is a HTML resource and whether it specifies an encoding mode;
a mode identifying module, configured to, if the web page resource is a HTML resource and it does not specify the encoding mode, identify the encoding mode of the HTML resource; and
a resource decoding module, configured to decode the HTML resource with a decoding mode corresponding to the identified encoding mode.

In an embodiment, the device further includes:
an encoding detecting module, configured to, if the web page resource is a HTML resource and it specifies an encoding mode, detect whether the specified encoding mode is one of preset encoding modes; and

the mode identifying module, configured to, if the specified encoding mode is not one of the preset encoding modes, identify the encoding mode of the HTML resource; or, an automatic correcting module, configured to, if the specified encoding mode is not one of the preset encoding modes, perform an automatic correction on the specified encoding mode, to obtain an encoding mode after the automatic correction.

In an embodiment, the mode identifying module is configured to identify the encoding mode of the HTML resource by calling a preset character encoding identification algorithm.

In an embodiment, the automatic correcting module includes:
a spelling calculating sub-module, configured to calculate a spelling similarity between the specified encoding mode and each of the preset encoding modes respectively; and
an automatic correcting sub-module, configured to, if a maximum spelling similarity is larger than a preset threshold, determine a preset encoding mode corresponding to the maximum spelling similarity as the encoding mode after the automatic correction.

In an embodiment, the device further includes:
an encoding reusing module, configured to, if the web resource is a CSS resource, identify the encoding mode of the HTML resource in the web page data as an encoding mode of the CSS resource, and decode the CSS resource with a decoding mode corresponding to the identified encoding mode.

According to a third aspect of embodiments of the present disclosure, there provides a device for identifying encoding of a web page, including:
a processor; and
a memory for storing instructions executable by the processor,
wherein the processor is configured to:
load web page data including at least one web page resource,
detect whether the web page resource is a HTML resource and whether it specifies an encoding mode,
if the web page resource is a HTML resource and it does not specify the encoding mode, identify the encoding mode of the HTML resource, and
decode the HTML resource with a decoding mode corresponding to the identified encoding mode.

According to a fourth aspect of the embodiments of the present disclosure, there provides a computer program, which when executing on a processor of a device for identifying encoding of a web page, performs a method according to the first aspect of embodiments of the present disclosure.

The technical solutions provided by the embodiments of the present disclosure include the advantageous effects as follows:
an encoding mode of a web page resource is identified in case the web page resource does not specify the encoding mode, and the web page resource is decoded with a decoding mode corresponding to the encoding mode, thereby the problem in the related art that a "charset" field in encoding a web page is missed that results in display of messy codes through a browser is overcome, then even if the encoding mode is not specified, the web page resource may be decoded and displayed properly.

It is to be understood that both the foregoing general description and the following detailed description are exemplary and explanatory only and can not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for identifying encoding of a web page, according to an exemplary embodiment;
Fig. 2 is a flow chart showing a method for identifying encoding of a web page, according to another exemplary embodiment;
Fig. 3 is a block diagram illustrating a device for identifying encoding of a web page, according to an exemplary embodiment;
Fig. 4 is a block diagram illustrating a device for identifying encoding of a web page, according to another exemplary embodiment; and
Fig. 5 is a block diagram illustrating a device for identifying encoding of a web page, according to an exemplary embodiment.

Through the above accompany drawings, the specific embodiments of the present disclosure have been shown, for which a more detailed description will be given as below. These drawings and textual description are not intended to limit the scope of the concept of the present disclosure in any manner, but to explain the concept of the present disclosure to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

Terminals involved in embodiments of the present disclosure may be mobile phones, tablet computers, e-book readers, MP3 (Moving Picture Experts Group Audio Layer III) players, MP4 (Moving Picture Experts Group Audio Layer IV) players, portable laptops and desktop computers, etc.

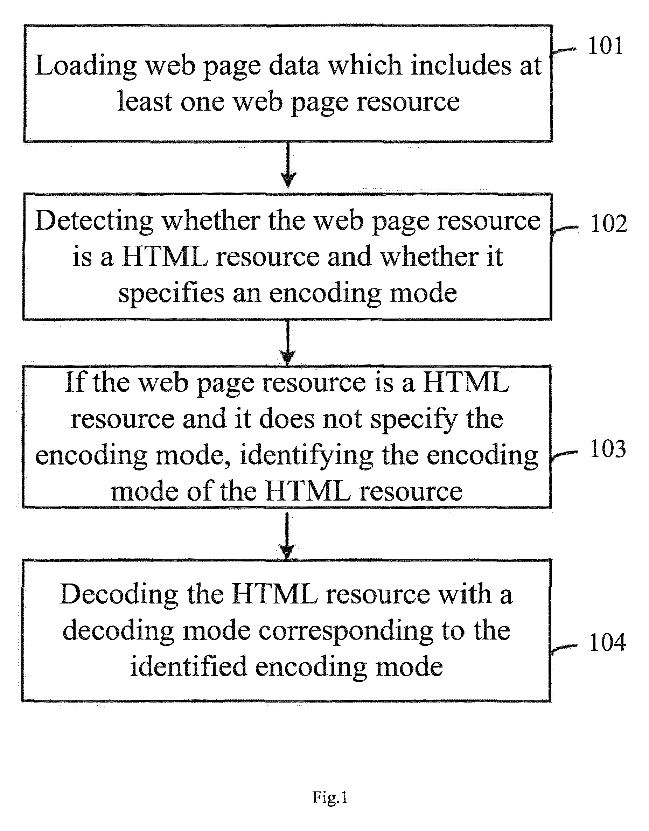

Fig. 1 is the flow chart of a method for identifying encoding of a web page, according to an exemplary embodiment. In this embodiment, the method for identifying encoding of a web page is applied, for example, in a terminal. The method for identifying encoding of a web page includes the following steps.

In step 101, web page data is loaded, which includes at least one web page resource.

Web page resources are conventionally of 2 types: HTML (Hyper Text Mark-up Language) resources and CSS (Cascading Style Sheets) resources.

In step 102, it is detected whether the web page resource is a HTML resource and whether it specifies an encoding mode.

In step 103, if the web page resource is a HTML resource and it does not specify the encoding mode, the encoding mode of the HTML resource is identified.

In step 104, the HTML resource is decoded with a decoding mode corresponding to the identified encoding mode.

Accordingly, in the method for identifying encoding of a web page provided by this embodiment, an encoding mode of a web page resource is identified in case the web page resource does not specify the encoding mode, and the web page resource is decoded with a decoding mode corresponding to the encoding mode, thereby the problem in the related art that a "charset" field in encoding a web page is missed that results in display of messy codes through a browser is overcome, then even if the encoding mode is not specified, the web page resource may be decoded and displayed properly.

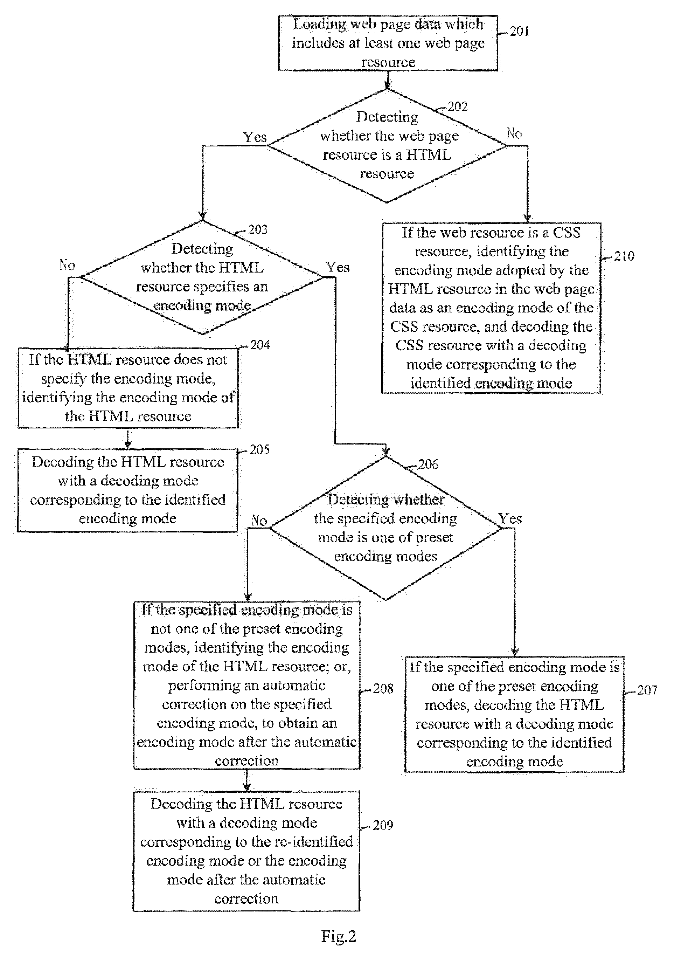

Fig. 2 is a flow chart showing a method for identifying encoding of a web page, according to another exemplary embodiment. In this embodiment, the method for identifying encoding of a web page is applied, for example, in a terminal. The method for identifying encoding of a web page includes the following steps.

In step 201, web page data is loaded, which includes at least one web page resource.

When a terminal needs to display a web page, data of the web page is firstly loaded. Data of each web page includes at least one web page resource.

Web page resources are conventionally of 2 types: HTML resources and CSS resources.

In step 202, it is detected whether the web page resource is a HTML resource.

Before each web page resource is decoded, the terminal firstly detects whether the web page resource is a HTML resource.

If the web page resource is a HTML resource, the process is turned to step 203; and

if the web page resource is a CSS resource, the process is turned to step 210.

In step 203, it is detected whether the HTML resource specifies an encoding mode.

Commonly used encoding modes include: UTF-8 (8-bit Unicode Transformation Format), Big5, GB2312 (Encoded Chinese Character Set for Information Exchange), GBK (Encoded Chinese Character Set for Information Exchange), ISO-8859-1 (International Organization for Standardization) and ISO-8859-2, etc.

A HTML resource generally specifies its encoding mode by utilizing a "charset" field. However, since developer of web pages are of different levels, the "charset" field in the HTML resource may be missed or misspelt.

If the HTML resource does not specify an encoding mode, the process is turned to step 204; and
if the HTML resource specifies an encoding mode, the process is turned to step 206.

In step 204, if the HTML resource does not specify the encoding mode, the encoding mode of the HTML resource is identified.

The terminal may identify the encoding mode of the HTML resource by calling a preset character encoding identification algorithm. The preset character encoding identification algorithm may be a chardet character encoding identification algorithm.

For example, if the HTML resource does not specify the encoding mode, the terminal calls the chardet character encoding identification algorithm and thus identifies that the encoding mode adopted by the HTML resource is GB2312.

The chardet character encoding identification algorithm is an algorithm for identifying an encoding format of a character string, which is often used for identifying an encoding format of textual characters.

In order to improve the identification speed, the terminal may extract a predetermined length of character string from the HTML resource, and identify the encoding mode of the predetermined length of character string through a preset character encoding identification algorithm, instead of identifying all of the character strings throughout the HTML resource.

In step 205, the HTML resource is decoded with a decoding mode corresponding to the identified encoding mode.

After the encoding mode adopted by the HTML resource is identified, the terminal decodes the HTML resource with a decoding mode corresponding to the identified encoding mode.

In step 206, if the web page resource specifies an encoding mode, it is detected whether the specified encoding mode is one of the preset encoding modes.

In case the web page resource specifies an encoding mode, since the specified encoding mode may be incorrectly spelled, the terminal detects whether the specified encoding mode is one of the preset encoding modes.

The preset encoding modes include but not limited to: UTF-8 (8-bit Unicode Transformation Format), Big5, GB2312 (Encoded Chinese Character Set for Information Exchange), GBK (Encoded Chinese Character Set for Information Exchange), ISO-8859-1 (International Organization for Standardization), ISO-8859-2, etc.

If the specified encoding mode is one of the preset encoding modes, the process is turned to step 207; and
if the specified encoding mode is not one of the preset encoding modes, the process is turned to step 208.

In step 207, if the specified encoding mode is one of the preset encoding modes, the HTML resource is decoded with a decoding mode corresponding to the identified encoding mode.

In case the specified encoding mode is one of the preset encoding modes, it means that no spelling error exists in the specification of the encoding mode, so the terminal decodes the HTML resource with a decoding mode corresponding to the identified encoding mode.

In step 208, if the specified encoding mode is not one of the preset encoding modes, the encoding mode of the HTML resource is identified; or, an automatic correction is performed on the specified encoding mode, to obtain an encoding mode after the automatic correction.

In case the specified encoding mode is not one of the preset encoding modes, it means that a spelling error exists in the specification of the encoding mode. In this regard, this embodiments provides two different processes:

A first process is: the terminal identifies the encoding mode of the HTML resource.

The identification process is similar to that of step 204, that is, the terminal may identify the encoding mode of the HTML resource by calling a preset character encoding identification algorithm. The preset character encoding identification algorithm may be a chardet character encoding identification algorithm.

A second process is: the terminal performs an automatic correction on the specified encoding mode, to obtain an encoding mode after the automatic correction.

The automatic correction process is: the terminal calculates a spelling similarity between the specified encoding mode and each of the preset encoding modes respectively. If there are 6 types of preset encoding modes, 6 spelling similarity in spelling may be calculated out. If a maximum spelling similarity is larger than a preset threshold, the terminal determines a preset encoding mode corresponding to the maximum spelling similarity as the encoding mode after the automatic correction.

For example, the specified encoding mode is "GB2812", there are 6 types of preset encoding modes, and there are 6 calculated spelling similarities. Wherein a maximum spelling similarity is that with the preset encoding mode "GB2312", which is 83% and larger than a preset threshold 60%. Thus, the terminal determines the preset encoding mode "GB2312" as the encoding mode after the automatic correction.

It should be noted that, the first process and the second process may be used separately or in combination. A possible combination is: the second process is firstly performed, and then if the maximum spelling similarity is less than a preset threshold, or if the maximum spelling similarity is in respect with two or more preset encoding modes, the terminal may performs the first process, to re-identify the encoding mode of the HTML resource.

In step 209, the HTML resource is decoded with a decoding mode corresponding to the re-identified encoding mode or the encoding mode after the automatic correction.

In step 210, if the web resource is a CSS resource, the encoding mode adopted by the HTML resource in the web page data is identified as an encoding mode of the CSS resource, and the CSS resource is decoded with a decoding mode corresponding to the identified encoding mode.

That is, if the current web page resource is a CSS resource rather than a HTML resource, since a HTML resource and a CSS resource in data of a same web page generally adopt a same encoding mode, the terminal identifies the encoding mode adopted by the HTML resource in the web page data as an encoding mode of the CSS resource. Wherein, the process for identifying the encoding mode of the HTML resource may be referred to the above steps 202 to 207.

Afterwards, the terminal decodes the CSS resource with a decoding mode corresponding to the encoding mode of the CSS resource.

Finally, after each of the web page resources are decoded, the terminal may display the web page according to the decoded web page resources.

Accordingly, in the method for identifying encoding of a web page provided by this embodiment, an encoding mode of a web page resource is identified in case the web page resource does not specify the encoding mode, and the web page resource is decoded with a decoding mode corresponding to the encoding mode, thereby the problem in the related art that a "charset" field in encoding a web page is missed that results in display of messy codes through a browser is overcome, then even if the encoding mode is not specified, the web page resource may be decoded and displayed properly.

In the method for identifying an encoding mode of a web page resource provided by this embodiment, in case the web page resource specifies the encoding mode but a spelling error exists in the specification of the encoding mode, the web resource is decoded with a decoding mode corresponding to the re-identified encoding mode or the encoding mode after the automatic correction, thereby the problem in the related art that a "charset" field in encoding a web page is misspelt that results in display of messy codes through a browser is overcome, then even if the encoding mode is misspelt, the web page resource may be decoded and displayed properly.

The following are embodiments of devices of the present disclosure, which may be configured to perform the embodiments of the method of the present disclosure. Details that are not disclosed in the embodiments of the device of the present may be referred to the embodiments of the method of the present disclosure.

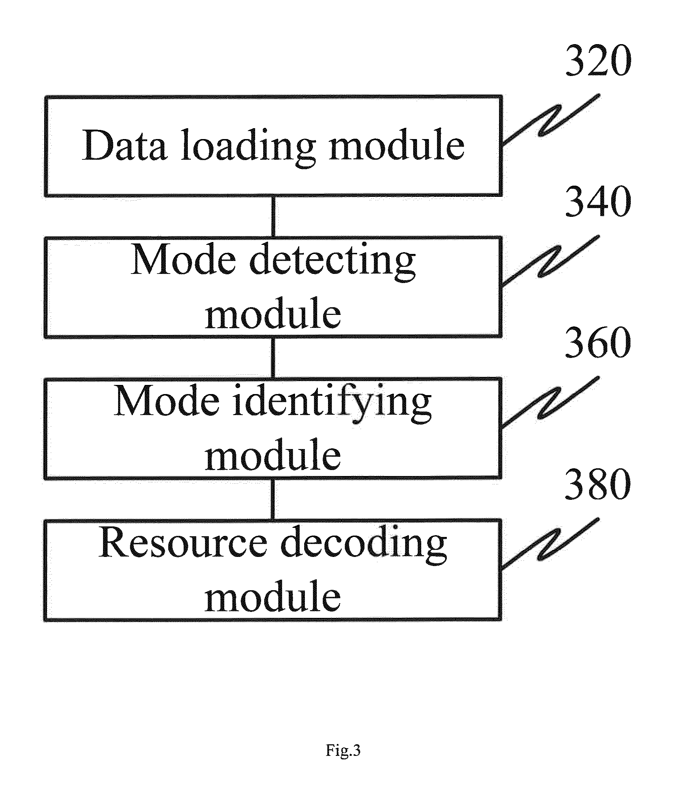

Fig. 3 is a block diagram illustrating a device for identifying encoding of a web page, according to an exemplary embodiment. The device for identifying encoding of a web page may be implemented by software, hardware or a combination of the both as a part of or whole of a terminal. The device for identifying encoding of a web page may include:
a data loading module 320, configured to load web page data including at least one web page resource;
a mode detecting module 340, configured to detect whether the web page resource is a HTML resource and whether it specifies an encoding mode;
a mode identifying module 360, configured to, if the web page resource is a HTML resource and it does not specify the encoding mode, identify the encoding mode of the HTML resource; and
a resource decoding module 380, configured to decode the HTML resource with a decoding mode corresponding to the identified encoding mode.

Accordingly, in the device for identifying encoding of a web page provided by this embodiment, an encoding mode of a web page resource is identified in case the web page resource does not specify the encoding mode, and the web page resource is decoded with a decoding mode corresponding to the encoding mode, thereby the problem in the related art that a "charset" field in encoding a web page is missed that results in display of messy codes through a browser is overcome, then even if the encoding mode is not specified, the web page resource may be decoded and displayed properly.

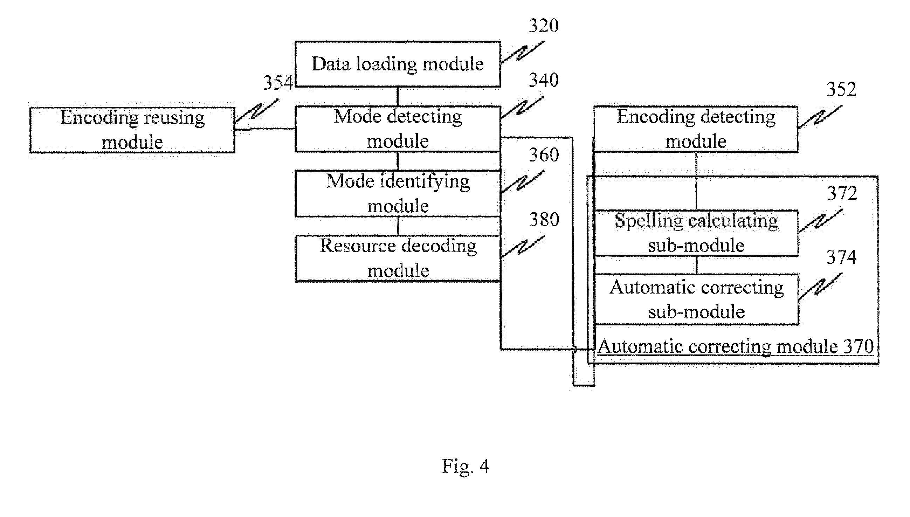

Fig. 4 is a block diagram illustrating a device for identifying encoding of a web page, according to another exemplary embodiment. The device for identifying encoding of a web page may be implemented by software, hardware or a combination of the both as a part of or whole of a terminal. The device for identifying encoding of a web page may include:
a data loading module 320, configured to load web page data including at least one web page resource;
a mode detecting module 340, configured to detect whether the web page resource is a HTML resource and whether it specifies an encoding mode;
a mode identifying module 360, configured to, if the web page resource is a HTML resource and it does not specify the encoding mode, identify the encoding mode of the HTML resource; and
a resource decoding module 380, configured to decode the HTML resource with a decoding mode corresponding to the identified encoding mode.

Optionally, the device further includes:
an encoding detecting module 352, configured to, if the web page resource is a HTML resource and it specifies an encoding mode, detect whether the specified encoding mode is one of preset encoding modes; and
the mode identifying module 360, configured to, if the specified encoding mode is not one of the preset encoding modes, identify the encoding mode of the HTML resource; or,
an automatic correcting module 370, configured to, if the specified encoding mode is not one of the preset encoding modes, perform an automatic correction on the specified encoding mode, to obtain an encoding mode after the automatic correction.

Optionally, the mode identifying module 360 is configured to identify the encoding mode of the HTML resource by calling a preset character encoding identification algorithm.

Optionally, the automatic correcting module 370 includes:
a spelling calculating sub-module 372, configured to calculate a spelling similarity between the specified encoding mode and each of the preset encoding modes respectively; and
an automatic correcting sub-module 374, configured to, if a maximum spelling similarity is larger than a preset threshold, determine a preset encoding mode corresponding to the maximum spelling similarity as the encoding mode after the automatic correction.

Optionally, the device further includes:
an encoding reusing module 354, configured to, if the web resource is a CSS resource, identify the encoding mode of the HTML resource in the web page data as an encoding mode of the CSS resource, and decode the CSS resource with a decoding mode corresponding to the identified encoding mode.

Accordingly, in the device for identifying encoding of a web page provided by this embodiment, an encoding mode of a web page resource is identified in case the web page resource does not specify the encoding mode, and the web page resource is decoded with a decoding mode corresponding to the encoding mode, thereby the problem in the related art that a "charset" field in encoding a web page is missed that results in display of messy codes through a browser is overcome, then even if the encoding mode is not specified, the web page resource may be decoded and displayed properly.

In the device for identifying an encoding mode of a web page resource provided by this embodiment, in case the web page resource specifies the encoding mode but a spelling error exists in the specification of the encoding mode, the web resource is decoded with a decoding mode corresponding to the re-identified encoding mode or the encoding mode after the automatic correction, thereby the problem in the related art that a "charset" field in encoding a web page is misspelt that results in display of messy codes through a browser is overcome, then even if the encoding mode is misspelt, the web page resource may be decoded and displayed properly.

With respect to the devices in the above embodiments, the specific manners for performing operations for individual modules therein have been described in detail in the embodiments regarding the method, which will not be elaborated herein.

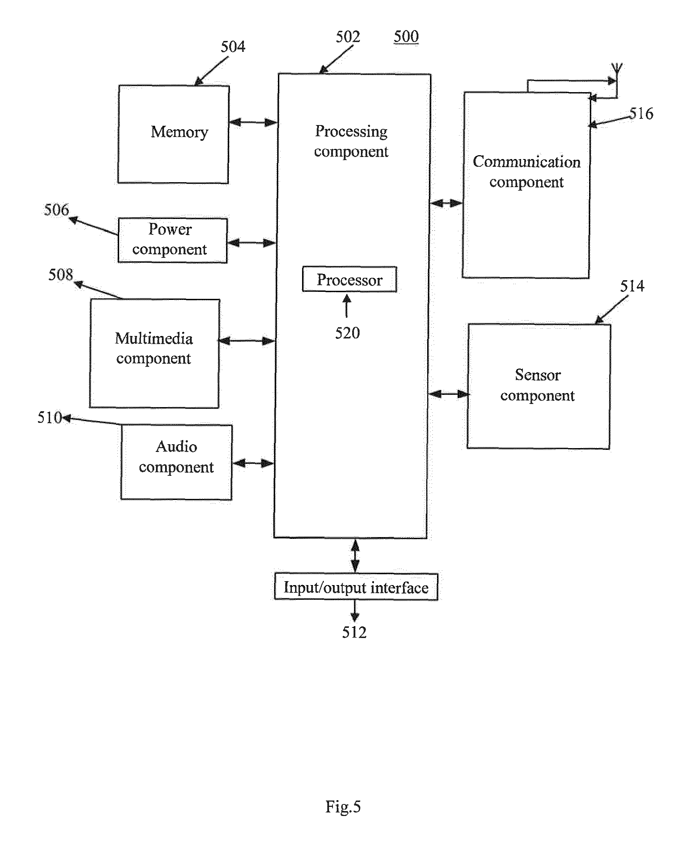

Fig. 5 is a block diagram illustrating a device for identifying encoding of a web page, according to an exemplary embodiment. For example, the device 500 may be a mobile phone, a computer, a digital broadcast terminal, a messaging device, a gaming console, a tablet, a medical device, exercise equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an open/closed status of the device 500, relative positioning of components, e.g., the display and the keypad, of the device 500, a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the device 500 and other devices. The device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there also provides a non-transitory computer-readable storage medium including instructions, such as the memory 504 including the instructions, wherein the instructions are executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of the device 500, the device 500 is enabled to perform the method for identifying encoding of a web page as illustrated in Figs. 1 and 2.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being specified by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for identifying encoding of a web page, **characterized in that** the method comprises:
loading (101) web page data comprising at least one web page resource;
detecting (102) whether the web page resource is a HTML resource and whether it specifies an encoding mode;
if the web page resource is a HTML resource and it does not specify the encoding mode, identifying (103) the encoding mode of the HTML resource; and
decoding (104) the HTML resource with a decoding mode corresponding to the identified encoding mode.

2. The method of claim 1, wherein the method further comprises:
if the web page resource is a HTML resource and it specifies an encoding mode, detecting (206) whether the specified encoding mode is one of preset encoding modes; and
if the specified encoding mode is not one of the preset encoding modes, identifying (208) the encoding mode of the HTML resource; or, performing an automatic correction on the specified encoding mode, to obtain the encoding mode after the automatic correction.

3. The method of claim 1 or 2, wherein the identifying the encoding mode of the HTML resource, comprises:
identifying (204) the encoding mode of the HTML resource by calling a preset character encoding identification algorithm.

4. The method of claim 2, wherein the performing the automatic correction on the specified encoding mode, to obtain the encoding mode after the automatic correction, comprises:
calculating a spelling similarity between the specified encoding mode and each of the preset encoding modes respectively; and
if a maximum spelling similarity is larger than a preset threshold, determining a preset encoding mode corresponding to the maximum spelling similarity as the encoding mode after the automatic correction.

5. The method of any preceding claim, wherein the method further comprises:
if the web resource is a CSS resource, identifying (210) the encoding mode adopted by the HTML resource in the web page data as an encoding mode of the CSS resource, and decoding the CSS resource with a decoding mode corresponding to the identified encoding mode.

6. A device for identifying encoding of a web page, **characterized in that**, the device comprises:
a data loading module (320), configured to load web page data comprising at least one web page resource;
a mode detecting module (340), configured to detect whether the web page resource is a HTML resource and whether it specifies an encoding mode;
a mode identifying module (360), configured to, if the web page resource is a HTML resource and it does not specify the encoding mode, identify the encoding mode of the HTML resource; and
a resource decoding module (380), configured to decode the HTML resource with a decoding mode corresponding to the identified encoding mode.

7. The device of claim 6, wherein the device further comprises:
an encoding detecting module (352), configured to, if the web page resource is a HTML resource and it specifies an encoding mode, detect whether the specified encoding mode is one of preset encoding modes; and wherein
either the mode identifying module (360) is configured to, if the specified encoding mode is not one of the preset encoding modes, identify the encoding mode of the HTML resource; or
the device further comprises an automatic correcting module (370), configured to, if the specified encoding mode is not one of the preset encoding modes, perform an automatic correction on the specified encoding mode, to obtain the encoding mode after the automatic correction.

8. The device of claim 6 or 7, wherein
the mode identifying module (360) is configured to identify the encoding mode of the HTML resource by calling a preset character encoding identification algorithm.

9. The device of claim 7, wherein the automatic correcting module (370) comprises:
a spelling calculating sub-module (372), configured to calculate a spelling similarity between the specified encoding mode and each of the preset encoding modes respectively; and
an automatic correcting sub-module (374), configured to, if a maximum spelling similarity is larger than a preset threshold, determine a preset encoding mode corresponding to the maximum spelling similarity as the encoding mode after the automatic correction.

10. The device of any of claims 6 to 9, wherein the device further comprises:
an encoding reusing module (354), configured to, if the web resource is a CSS resource, identify the encoding mode of the HTML resource in the web page data as an encoding mode of the CSS resource, and decode the CSS resource with a decoding mode corresponding to the identified encoding mode.

11. A device for identifying encoding of a web page, **characterized in that**, the device comprises:
a processor (520); and
a memory (504) for storing instructions executable by the processor,
wherein the processor (520) is configured to carry out the method of any of claims 1 to 5.

12. A computer program, which when executed on a computer causes it to carry out the method according to any one of claims 1-5.

13. A computer readable medium having stored thereon computer executable instructions that when executed by a processor of a computer cause it to carry out the method of any one of claims 1-5.
